# EUROPÄISCHE PATENTANMELDUNG

(11) **EP 4 269 009 A1**
(43) Veröffentlichungstag der Anmeldung: **01.11.2023**
(21) Anmeldenummer: 22170600.5
(22) Anmeldetag: 28.04.2022
(51) Int. Cl.: B23D 35/00, B23D 19/06

(54) **MESSERWELLE FÜR EINE LÄNGSSCHNEIDEANLAGE ZUM SCHNEIDEN VON METALLBÄNDERN UND VERFAHREN ZUM LÄNGSSCHNEIDEN VON METALLBÄNDERN**

(71) Anmelder: Speira GmbH, 41515 Grevenbroich (DE)
(72) Erfinder: HASHMI, Adeel, 22549 Hamburg (DE); BENZLER, Tobias, 21279 Appel OT Grauen (DE); STEIN, Heinz Adolf, 21723 Hollern-Twielenfleth (DE)
(74) Vertreter: Walther Bayer Faber Patentanwälte PartGmbB

(57) **Zusammenfassung**

Gegenstand der Erfindung ist eine Messerwelle (1) für eine Längsschneideanlage zum Längsschneiden eines Metallbandes, aufweisend einen Wellenkörper (10), auf dem mehrere Messerringe (11) aufgenommen sind, wobei jedem Messerring (11) ein Muffenelement (12) zugeordnet ist, mittels dem der Messerring (11) auf dem Wellenkörper (10) gehalten ist. Erfindungsgemäß ist zwischen dem Wellenkörper (10) und den Muffenelementen (12) ein Paßfederelement (13) eingebracht. Die Erfindung betrifft ferner ein Verfahren zum Längsschneiden von Metallbändern mittels einer Längsschneideanlage zum Schneiden von Metallbändern, aufweisend eine solche Messerwelle (1).

## Beschreibung

Die vorliegende Erfindung betrifft eine Messerwelle für eine Längsschneideanlage zum Längsschneiden eines Metallbandes, aufweisend einen Wellenkörper, auf dem mehrere Messerringe aufgenommen sind, wobei jedem Messerring ein Muffenelement zugeordnet ist, mittels dem der Messerring auf dem Wellenkörper gehalten ist.

### STAND DER TECHNIK

Messerwellen mit mehreren auf diesen aufgebrachten Messerringen werden in an sich bekannter Weise mittels sogenannter Scherenbauroboter aufgebaut. Ein übliches Verfahren zum Aufbau solcher Messerwellen ist die Kombination von Distanzringen, Auswerferringen und Messerringen in Anordnung auf dem Wellenkörper der Messerwelle, sodass zur Erzeugung des erforderlichen axialen Abstandes der Messerringe zueinander entsprechend dimensionierte Distanzringe zwischen den Messerringen bzw. Auswerferringe auf dem Wellenkörper fest angeordnet werden. Wird die Messerwelle in der Längsschneideanlage eingesetzt, kann aus einem Metallband eine Anzahl von vereinzelten Metallstreifen erzeugt werden, indem das Metallband entlang seiner Längsrichtung mittels der Messerringe geschnitten wird. Hierzu werden zwei parallel zueinander angeordnete Messerwellen vorgesehen, bei denen sich die Messerringe so gegenüberstehen, dass eine scherenähnliche Anordnung der Schneidkanten der Messerringe auf den parallel zueinander angeordneten Wellenkörpern zueinander entsteht. Auf einer solchen Längsschneideanlage werden in der Regel beide Messerwellen angetrieben, sodass das Metallband schließlich durch die Anordnung der Messerwelle hindurchgezogen und geschnitten wird.

Wenn der Wellenkörper der Messerwelle mit den Distanzringen, Auswerferringen und Messerringen manuell bestückt wird, wird häufig eine große Stillstandszeit der Längsschneideanlage verursacht, wohingegen bei der Anwendung eines Scherenbauroboters ein großer Platzbedarf häufig von Nachteil ist.

Beispielsweise zeigt die DE 33 21 505 A1 eine Messerwelle für eine Längsschneidanlage mit einem Muffenelement, über das der Messerring auf dem Wellenkörper der Messerwelle gehalten werden kann. Um das Muffenelement auf dem Wellenkörper festzusetzen, wird ein Elastomerkörper vorgeschlagen, der von innen fluidisch druckbeaufschlagt werden kann. Diese Ausführung einer Muffe zur Aufnahme eines Messerringes ist aufwendig, jedoch kann das Muffenelement mit dem Messerring auf einfache Weise axial auf dem Wellenkörper verschoben werden.

Aus der EP 0 523 369 A1 ist der Aufbau einer Messerwelle für eine Längsschneideanlage bekannt, wobei auf dem Wellenkörper ein Passfederelement vorgesehen ist, mittels dem die weiterhin vorgesehenen Auswerferringe unmittelbar auf dem Wellenkörper festgesetzt werden, um eine Verdrehung der Ringe zu verhindern. Eine axiale Verlagerung der Messerringe sowie der weiteren Auswerferringe ist jedoch auch hierbei unverändert aufwendig.

Es gibt für den Aufbau von Messerwellen auch alternative Verfahren. Z. B. kann der Messerring mit einer Werkzeugklemmung oder einer Wellenklemmung eingespannt werden, sodass die Verwendung von Distanzringen entfallen kann. Eine klemmende Aufnahme von Messerringen ist allerdings nur bei einem Schneidvorgang von Blechen oder Bändern mit einer Dicke von weniger als 1 mm geeignet. Für Metallbänder, die eine Dicke von mehr als 1 mm aufweisen, kann eine klemmende Aufnahme der Messerringe nicht verwendet werden, da die Klemmkraft nicht ausreicht, und der Messerring axial und/oder radial aus seiner geforderten Position herauswandert.

Bei größeren Dicken von Metallbändern von beispielsweise 1 mm bis 4 mm wäre eine höhere Klemmkraft zwischen dem Wellenkörper und dem Messerring erforderlich, die mit normalen Mitteln nicht mehr zu realisieren ist, da die Schneidkräfte die Klemmkräfte zur Aufnahme der Messerringe übersteigen, und das Messer beginnt insbesondere sich radial und/oder in Umfangsrichtung zu bewegen oder auf dem Wellenkörper zu drehen.

### OFFENBARUNG DER ERFINDUNG

Die Aufgabe der Erfindung besteht darin, eine verbesserte Messerwelle zu schaffen, die eine einfache Aufnahme von Messerringen ermöglicht, und bei der auf die Verwendung von Distanzringen verzichtet werden kann, wobei bei einer einfachen Aufnahme der Messerringe größere Dicken von Metallbändern mit einer Längsschneideanlage geschnitten werden sollen, insbesondere Dicken, die größer sind als 1 mm.

Diese Aufgabe wird ausgehend von einer Messerwelle gemäß dem Oberbegriff des Anspruches 1 in Verbindung mit den kennzeichnenden Merkmalen gelöst. Weiterhin wird die Aufgabe gelöst durch ein Verfahren gemäß Anspruch 13. Vorteilhafte Weiterbildungen der Erfindung sind in den jeweils abhängigen Ansprüchen angegeben.

Die Erfindung sieht ausgehend von einer Messerwelle gemäß dem Oberbegriff des Anspruches 1 ferner vor, dass zwischen dem Wellenkörper und den Muffenelementen ein Passfederelement eingerichtet ist.

Die Erfindung bedient sich dem Gedanken, ein Passfederelement nicht mehr unmittelbar in Verbindung mit den Ringelementen selbst in Einsatz zu bringen, sondern es wird ein Muffenelement in Kombination mit einem Passfederelement genutzt, um die Messerringe auf dem Wellenkörper aufzunehmen. Es hat sich gezeigt, dass mit den Muffenelementen ein einfaches Festsetzen und Lösen auf dem Wellenkörper möglich ist, sodass an den Muffenelementen die Messerringe und ferner auch Auswerferringe aufgenommen werden können, und trotz der Aufnahme derartiger Ringe kann das Muffenelement beliebig oft und ohne beispielsweise benachbarte Messerringe in der Anordnung zu verändern, festgesetzt und vom Wellenkörper gelöst werden, um dieses axial zu verschieben.

Es besteht dabei die Möglichkeit, das Muffenelement so auszuführen, dass zwar eine axiale Stabilität der Muffenelemente und damit auch der Messerringe erreicht wird, ohne dass Distanzelemente verwendet werden, und für eine drehstarre Verbindung zwischen den Muffenelementen und dem Wellenkörper dient ein insbesondere einteilig sich über den Wellenkörper erstreckendes einzelnes Passfederelement.

Entlang oder auf diesem Passfederelement können so die Muffenelemente axial verlagert werden, wenn diese entsprechend gelöst werden. Werden die Muffenelemente festgesetzt, so hat sich gezeigt, dass die Muffenelemente eine hinreichende Verbindung zum Wellenkörper erzeugen können, um die axiale Position der Messerringe beizubehalten, wobei Umfangskräfte, insbesondere eine Drehmomentübertragung zwischen den Muffenelementen und dem Wellenkörper, mit dem Passfederelement übertragen werden können.

Auf diese Weise kann die Messerwelle einfach aufgebaut werden, und sollen die mit der Längsschneideanlage zu schneidenden Blechstreifen in der Breite verändert werden, so ist es hinreichend, die Muffenelemente leicht zu lösen und in ihrer axialen Position bereits dann zu verändern, ohne dass Distanzelemente zum Einsatz kommen, die nur über das Wellenende entfernt werden können und auf den Wellenkörper wieder aufgesetzt werden müssen.

Auf der anderen Seite müssen die Muffenelemente auch nicht zur Drehmomentübertragung auf dem Wellenkörper ausgebildet sein, etwa indem die Drehmomentübertragung nur über einen Reibschluss erfolgt. Das Passfederelement sorgt für einen umfangsseitigen Formschluss zwischen den Muffenelementen und dem Wellenkörper, sodass eine Drehmomentübertragung zwischen Muffenelement und Wellenkörper sichergestellt ist, die auch bei der Bearbeitung von Metallbändern mit einer Dicke von beispielsweise 1mm bis 4mm entstehen. Durch diesen erfindungsgemäß einfachen Aufbau der Messerwelle ist es hinreichend, beispielsweise mittels Referenz-Distanzelementen, die Breiten zwischen den Messerringen so einzustellen, wie die Blechstreifen aus dem Metallband dies fordern, ohne dass ein Scherenbauroboter zum Einsatz kommen muss. Die Referenz-Distanzelemente können nach dem Einrichten der Messerwelle von dieser wieder entfernt werden.

Vorteilhafterweise weisen die Muffenelemente auf einer Umfangsposition einen Schlitz auf, der so ausgeführt ist, dass bei einer Vergrößerung einer Breite des Schlitzes der Innendurchmesser der Muffenelemente vergrößert wird und diese auf dem Wellenkörper sodann axial verlagerbar sind und bei einer Verkleinerung der Breite des Schlitzes der Innendurchmesser der Muffenelemente verkleinert wird und diese auf dem Wellenkörper festsetzbar sind. Der Schlitz auf einer Umfangsposition der Muffenelemente ist so ausgeführt, dass die umlaufende, durchgehende Struktur der Muffenelemente an der Position des Schlitzes unterbrochen ist, und der Schlitz auch bei einer Klemmung der Muffenelemente auf dem Wellenkörper eine Rest-Breite aufweist. Die Änderung des Innendurchmessers der Muffenelemente bei einer Vergrößerung oder Verkleinerung der Breite des Schlitzes kann dabei auch dann erfolgen, wenn an den Muffenelementen wenigstens ein Messerelement und insbesondere wenigstens ein Auswerferring angeordnet ist. Wird keine Kraft auf die Muffenelemente ausgeübt, indem die den Schlitz begrenzenden gegenüberliegenden umfänglichen Enden der Muffenelemente aufeinander zu oder voneinander weggezogen oder weggedrückt werden, können diese beispielsweise eine Übergangspassung auf dem Wellenkörper aufweisen, sodass die Muffenelemente beispielsweise in einer Axialrichtung leicht auf dem Wellenkörper verlagert werden können.

Der Schlitz erstreckt sich über die gesamte Querschnittsfläche der Muffenelemente, wobei die Querschnittsfläche so eingerichtet ist, dass eine an dem Ringkörper des Muffenelementes angelegte Tangente eine Flächennormale auf die Erstreckungsebene des Schlitzes bildet.

Schließlich ist vorgesehen, dass an den Muffenelementen eine Schraubverbindung eingerichtet ist, die den Schlitz vollständig überspannt, sodass bei einem Festsitzen der Schraubverbindung die Breite des Schlitzes verkleinerbar und bei einem Lösen der Schraubverbindung die Breite des Schlitzes aufgrund einer elastischen Auffederrung des Muffenelementes wieder vergrößerbar ist. Die Vergrößerung der Breite des Schlitzes geht dabei insbesondere mit der elastischen Rückfederung des Muffenelements einher, sodass bei einem Anziehen der Schraubverbindung das Muffenelement so vorgespannt wird, dass der Schlitz sich verkleinert und infolgedessen der Innendurchmesser der Muffenelemente ebenfalls kleiner wird. Federt das Muffenelement auf, vergrößert sich der Innendurchmesser wider. Die Schraubverbindung kann dabei so eingerichtet sein, dass in einem ersten Teil des Muffenelementes angrenzend an den Schlitz ein Schraubgewinde eingerichtet ist, in das ein Schraubelement der Schraubverbindung eingeschraubt wird, und im gegenüberstehenden zweiten Teil des Muffenelementes ist angrenzend an den Schlitz ein Schraubenkopf des Schraubelementes aufgenommen.

Weiterhin kann in den Muffenelementen eine Abdrückschraube eingerichtet sein, die so den Schlitz überspannt, dass bei einem Festsetzen der Abdrückschraube die Breite des Schlitzes wieder vergrößert wird. Insbesondere dann, wenn die elastische Rückfederung der Muffenelemente nicht ausreicht, um diese schließlich axial auf dem Wellenkörper verlagern zu können, kann die Abdrückschraube angespannt werden, die durch die Spannung den Schlitz folglich vergrößert. Die Abdrückschraube ist dabei in einem an dem Schlitz angrenzenden Endteil des Muffenelementes eingeschraubt und drückt stirnseitig gegen den gegenüberliegenden Endteil, wenn diese angezogen wird. Mit einem Endbereich der Abdrückschraube kann gegen die gegenüberliegende Planfläche des Muffenelementes gedrückt werden, die eine Begrenzungsfläche des Schlitzes bildet. Wird die Abdrückschraube in dieser Konfiguration festgeschraubt, so wird der Schlitz in seiner Breite vergrößert.

Vorteilhafterweise ist das Passfederelement am Wellenkörper festgesetzt, wobei in der Innenfläche der Muffenelemente eine Nut eingebracht ist, in die das Passfederelement eingreift. Das Festsetzen des Passfederelementes am Wellenkörper umfasst beispielsweise eine Verschraubung des Passfederelementes am Wellenkörper, insbesondere umfassend mehrere Schraubelemente, über der Länge des Passfederelements. Das Passfederelement ist dabei vorzugsweise so lang ausgeführt, dass nur ein Passfederelement am Wellenkörper angeordnet wird, und über das nur eine Passfederelement werden mehrere Muffenelemente am Wellenkörper in Umfangsrichtung festgesetzt. Alternativ zu einer Verschraubung kann das Passfederelement in eine vorbereitete Nut im Wellenkörper auch nur eingelegt oder eingepresst werden, beispielsweise über eine entsprechende Passung. Ist das Passfederelement am Wellenkörper angeordnet, erstreckt sich dieses parallel zur Rotationsachse des Wellenkörpers an seiner Umfangsposition der Außenumfangsfläche.

Vorteilhafterweise weist das Passfederelement einen Kreisquerschnitt auf und ist mit einem ersten Teilabschnitt des Kreisquerschnittes in einer Wellennut eingebracht und mit einem zweiten Teilabschnitt des Kreisquerschnittes in der Nut in der Innenfläche der insbesondere mehreren Muffenelemente eingebracht. Alternativ kann das Passfederelement auch einen Rechteckquerschnitt oder einen sonstigen Querschnitt umfassen.

Gemäß einer noch weiteren vorteilhaften Ausführungsform der Messerwelle kann angrenzend an den Messerring wenigstens ein Auswerferring an den Muffenelementen angeordnet sein. Besonders bevorzugt sind zwei Auswerferringe am Muffenelement angeordnet, wobei der Messerring zwischen den beiden Auswerferringen eingefasst sein kann.

So können der Auswerferring, insbesondere beide Auswerferringe, gemeinsam mit dem Messerring mittels Schraubelementen am Muffenelement verschraubt werden. Die Schraubelemente werden hierfür durch Durchgangsöffnungen im Auswerferring und im Messerring hindurchgeführt und am Muffenelement in eine Gewindebohrung eingeschraubt. Sind der wenigstens eine Auswerferring, insbesondere beide Auswerferringe, gemeinsam mit dem Messerring am Muffenelement verschraubt, so erstrecken sich die Schraubelemente parallel zur Rotationsachse des Wellenkörpers und die Auswerferringe, der Messerring und das Muffenelement sind aneinander plan anliegend auf Block miteinander verschraubt. Die Durchgangsöffnungen im Auswerferring und im Messerring weisen einen größeren Durchmesser auf als der Durchmesser der Schraubelemente. Dadurch wird der Vorteil erreicht, dass bei einer Vergrößerung des Innendurchmessers der Muffenelemente zur Verschiebung derselben auf dem Wellenkörper die verschraubten Auswerfer- und Messerringe am Muffenelement das Aufweiten des Innendurchmessers des Muffenelementes nicht verhindern, der der Schraubverband nicht verspannt. Der Innendurchmesser des Muffenelementes kann bei einer Vergrößerung der Breite des Spaltes am Muffenelement insofern vergrößert und bei einer Verringerung der Breite wieder verkleinert werden, obwohl der wenigstens eine Auswerferring und der Messerring insbesondere seitlich am Muffenelement verschraubt sind.

Der Messerring weist eine Umfangsfläche auf, die einen Zylinderabschnitt bilden kann, vorteilhafterweise jedoch weist die Umfangsfläche des Messerringes einen Kegelabschnitt auf, sodass die Umfangsfläche von der Seite gesehen folglich eine Schrägung umfasst. Der Kegelabschnitt der Umfangsfläche kann einen Kegelwinkel von beispielsweise 5° bis 20°, vorzugsweise von 7° bis 15° und besonders bevorzugt von 9° bis 11° und am meisten bevorzugt von 10° bilden. Besonders dadurch können Metallbänder längsgeschnitten werden, die eine Dicke von bis zu etwa 4 mm aufweisen. Werden zwei Messerwellen parallel zueinander angeordnet, und bilden die Schneidkanten der Messerringe jeweils eine Scherenanordnung, so können sich die Schneidkanten, die durch die Kante an der Umfangsfläche mit dem größeren Durchmesser gebildet wird, leicht überschneiden. Die sich gegenüberstehenden Umfangsflächen der Auswerferringe auf den beiden zueinander parallel verlaufenden Wellenkörpern weisen dabei einen Abstand zueinander auf, der etwa der Dicke des Metallbandes entspricht, das mit der Längsschneideanlage längsgeschnitten wird.

Damit der wenigstens eine Auswerferring und der Messerring seitlich am Muffenelement angeschraubt werden können, weist der umlaufende Querschnitt der Muffenelemente insbesondere keinen Rechteckquerschnitt auf, sondern der Querschnitt weist einen Klemmabschnitt mit größerem Durchmesser und einen Aufnahmeabschnitt mit kleinerem Durchmesser auf. Dabei kann der Klemmabschnitt die Anordnung der Schraubverbindung und/oder die Anordnung der Abdrückschraube aufweisen, und der wenigstens eine Auswerferring und der Messerring werden seitlich am Klemmabschnitt so angeschraubt, dass der wenigstens eine Auswerferring und der Messerring eine axiale Überdeckung mit dem Aufnahmeaufschnitt aufweisen.

Der Messerring und der wenigstens eine Auswerferring weisen einen Innendurchmesser auf, der größer ist als der Durchmesser der Außenumfangsfläche des Aufnahmeabschnittes. Somit entsteht ein radialer, umlaufender Spalt zwischen der Außenumfangsfläche des Aufnahmeabschnittes und dem Innendurchmesser von Auswerferring und Messerring. Soll das Muffenelement im Durchmesser vergrößert werden, um auf dem Wellenkörper axial verlagert zu werden, so bildet der radial umlaufende Spalt zwischen der Außenumfangsfläche des Aufnahmeabschnittes und dem Innenumfang des Messerringes bzw. des Auswerferringes einen Ausgleichsspalt, sodass bei einem Auffedern des Muffenelementes für ein Lösen auf dem Wellenkörper die Außenumfangsfläche des Aufnahmeabschnittes nicht innenseitig an den Messerring bzw. an den Auswerferring zur Anlage gelangt.

Im Ergebnis wird eine Messerwelle gebildet, bei der auf einem Wellenkörper über Muffenelemente aufgenommene Messerringe axial auf einfache Weise verlagert werden können, ohne dass zwischen den Messerringen bzw. Muffenelementen Distanzelemente vorgesehen werden müssen. Zur Herstellung der erforderlichen axialen Abstände zwischen den Messerringen könnten allerdings Distanzelemente vorübergehend für die Einrichtung der Messerwelle angewendet werden, die als Referenzlehren dienen können. Diese können aber vor Inbetriebnahme der Messerwelle von dieser wieder entfernt werden. Sind die Muffenelemente mit den Messerringen in der gewünschten axialen Position angeordnet, so müssen schließlich nur noch die Schraubverbindungen an den Muffenelementen wiederhergestellt werden, um die erforderliche Klemmung zu erzeugen. Sodann ist die Messerwelle einsatzbereit.

Die Erfindung richtet sich weiterhin auf ein Verfahren zum Längsschneiden von Metallbändern mittels einer Längsschneideanlage zum Schneiden von Metallbändern, wobei eine Messerwelle zum Ausführen des Verfahrens nach einem der vorgenannten Ansprüche in der Längsschneideanlage eingesetzt wird, und wobei die Metallbänder mit einer Metallbanddicke von 1 mm bis 4 mm längsgeschnitten werden.

Zum Ändern einer Streifenbreite der aus dem Metallband geschnittenen Metallbandstreifen werden die Schraubverbindungen an den Muffenelementen gelöst, bedarfsweise werden noch Andrückschrauben an den Muffenelementen angezogen, wobei dies insbesondere geschieht, ohne die Schraubelemente der Anbindung des Auswerferringes und des Messerringes zu lösen. Insbesondere ist das Verfahren auf eine axiale Verlagerung der Muffenelemente entlang der Rotationsachse des Wellenkörpers gerichtet. Dies erfolgt mit wenigstens den folgenden Schritten: Lösen der Schraubverbindung der Muffenelemente und/oder Anziehen der Abdrückschraube der Muffenelemente; axiales Verschieben der Muffenelemente mit dem Messerring und/oder mit dem wenigstens einen Auswerferring auf der Messerwelle und Lösen der Abdrückschraube der Muffenelemente und/oder Festziehen der Schraubverbindung der Muffenelemente. Die Ausführung dieser Schritte erfolgt ohne ein Lösen und wieder Festziehen der Schraubelemente, mit dem der wenigstens eine Auswerferring und der Messerring am Muffenelement befestigt sind.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: eine Ansicht von zwei Messerwellen in einer parallel zueinander vorgesehenen Anordnung,
- Figur 2a, 2b: eine Seitenansicht und eine quergeschnittene Ansicht von auf den Wellenkörpern aufgenommenen Muffenelementen mit jeweiligen Messerelementen,
- Figur 3a: eine Seitenansicht des Muffenelementes,
- Figur 3b: eine weitere, gedrehte Seitenansicht des Muffenelementes,
- Figur 3c: eine weitere, rotierte Ansicht des Muffenelementes,
- Figur 4a: eine Seitenansicht des Messerelementes,
- Figur 4b: eine quergeschnittene Ansicht des Messerelementes und
- Figur 5: eine quergeschnittene Ansicht eines Muffenelementes in Anordnung auf der Messerwelle.

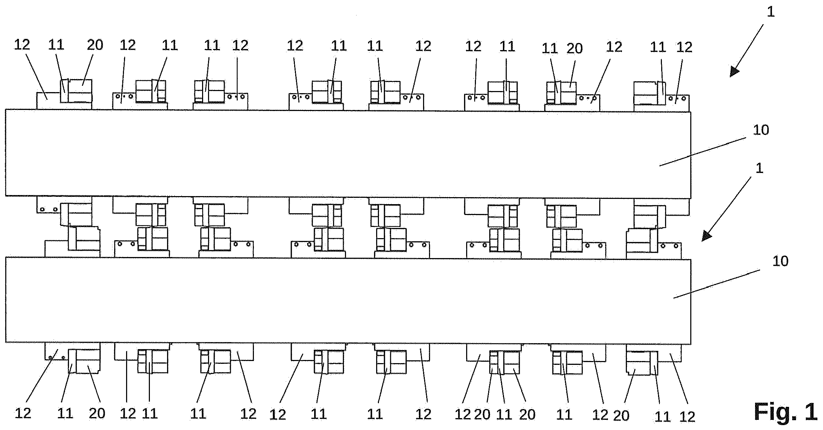

Figur 1 zeigt eine obere Messerwelle 1 und eine untere Messerwelle 1, wie diese in einer Längsschneideanlage zum Längsschneiden von Metallbändern angeordnet werden. Die Messerwellen 1 werden in einem Maschinengestell drehbar und angetrieben aufgenommen, wobei die Lagerung der Messerwellen 1 in nicht näher gezeigter Weise an den Wellenenden erfolgt. Über ein erstes Wellenende werden die Messerwellen 1 rotierend angetrieben, und über ein zweites Wellenende können die Lagerungen der Messerwellen 1 freigegeben werden, um diese zu bestücken, und um für den Betrieb anschließend wieder eingespannt zu werden.

Die Messerwelle 1 weist jeweils einen Wellenkörper 10 mit mehreren auf dem Wellenkörper 10 aufgebrachten Messerringen 11 auf. Zur Aufnahme der Messerringe 11 dienen Muffenelemente 12, und die Muffenelemente 12 sind unmittelbar auf dem Wellenkörper 10 aufgeklemmt. Die Messerringe 11 sind dabei an den Muffenelementen 12 befestigt.

Die Anordnung zeigt eine Anzahl von Messerringen 11 zur Erzeugung von sieben Metallstreifen, da die obere und untere Messerwelle 1 jeweils acht Messerringe 1 aufweist, zwischen denen sieben Metallstreifen geschnitten werden können. Die oberen und unteren Messerringe 11 sind so zueinander angeordnet, dass die Messerringe 11 in ihrer paarweisen Anordnung jeweils eine Scherenkonfiguration bilden, über die das durchlaufende Metallband kontinuierlich geschnitten wird.

Dabei sind zwei weitere Muffenelemente 12 gezeigt, auf denen jeweils ein Messerring 11 und jeweils ein Auswerferring 20 aufgenommen sind. Die zwischen den äußeren Messerringen 11 vorhandenen Messerringe 11 sind durch jeweils seitlich benachbarte Auswerferringe 20 eingefasst. Die Messerringe 11 sind dabei gemeinsam mit den Auswerferringen 20 in nachfolgend näher beschriebener Weise an den Muffenelementen 12 befestigt.

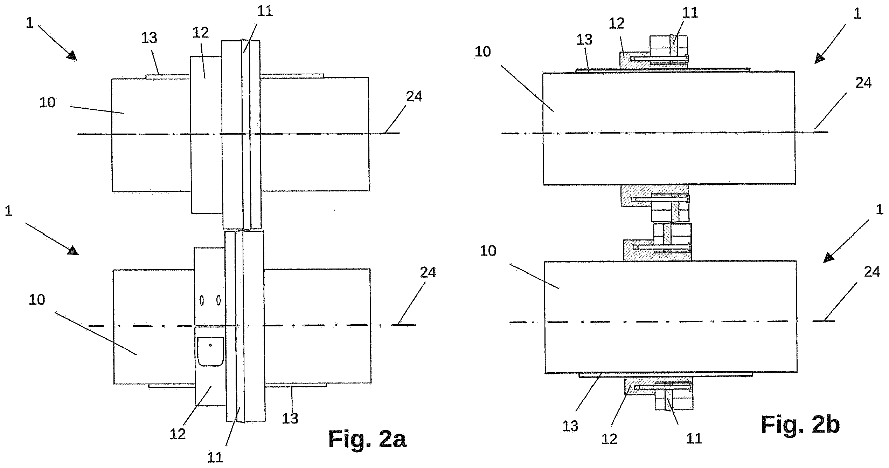

Die Figuren 2a und 2b zeigen jeweils einen Abschnitt des Wellenkörpers 10 mit einem auf dem Wellenkörper 10 aufgebrachten Muffenelement 12, wobei die Figur 2a die Ansicht der Messerwellen 1 in einer Seitendarstellung zeigt, und Figur 2b zeigt die Muffenelemente 12 mit den Messerringen 11 in geschnittener Ansicht. Die Darstellungen zeigen die Messerwelle 1 mit dem Wellenkörper 10, auf dem jeweils beispielhaft nur ein Muffenelement 12 aufgebracht ist. Dabei ist in einer Umfangsposition in dem Wellenkörper 10 ein Passfederelement 13 eingebracht, und mit dem Passfederelement 13 wird das Muffenelement 12 drehmomentübertragend auf dem Wellenkörper 10 fixiert, sodass das Muffenelement 12 auf dem Wellenkörper 10 keine Drehbewegung um die Rotationsachse 24 ausführen kann. Die Darstellung zeigt nur ein Muffenelement 12 in Anordnung auf dem Wellenkörper 10, und der Wellenkörper 10 selbst ist verkürzt dargestellt.

Für die Messerwelle 1 weist der Wellenkörper 10 eine größere Länge auf, und auf diesem sind mehrere Muffenelement 12 mit jeweiligen Messerringen 11 angeordnet, wobei das Passfederelement 13 so lang ausgeführt ist, dass mit einem einzigen Passfederelement 13 sämtliche Muffenelemente 12 drehmomentstarr auf dem Wellenkörper 11 angeordnet werden können.

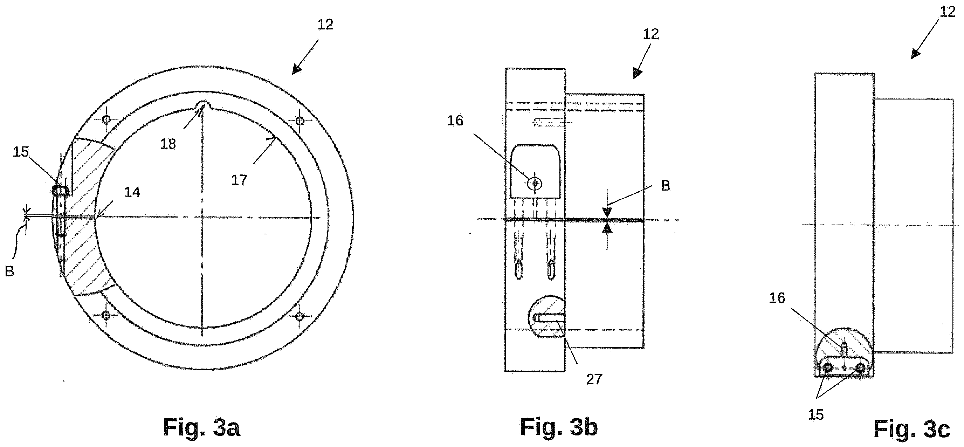

Die Figuren 3a, 3b und 3c zeigen in einer ersten, zweiten, und dritten Front- und Seitenansicht das Muffenelement 12. Am Muffenelement ist in einer Umfangsposition ein Schlitz 14 mit einer Breite B eingebracht, der so ausgeführt ist, dass dieser im umlaufenden Ringquerschnitt liegt, und sodass der umlaufende Ringquerschnitt an der Position des Schlitzes 14 unterbrochen ist. Der Schlitz 14 weist eine Breite auf, die mittels einer Schraubverbindung 15 vergrößert und verkleinert werden kann. Die Schraubverbindung 15 ist in einem Seitenbereich des Schlitzes 14 in eine Gewindebohrung eingebracht, und in einem gegenüberliegenden Seitenbereich des Schlitzes 14 kann die Schraube hindurchgesteckt werden, und auf dem kann auch der Schraubenkopf aufliegen.

So kann bei einem Festziehen der Schraubverbindung der Innendurchmesser der Innenfläche 17 des Muffenelementes 12 verkleinert werden, und wird die Breite des Schlitzes 14 vergrößert, vergrößert sich auch der Durchmesser der Innenfläche 17. So kann durch ein Festziehen und ein Lösen der Schraubverbindung 15 das Muffenelement 12 auf dem Wellenkörper 10 entweder festgesetzt werden oder axialbeweglich sein. Um die Breite des Schlitzes 14 auch bei einer gelösten Schraubverbindung 15 zusätzlich zu vergrößern, ist ferner eine Abdrückschraube 16 vorgesehen, mit der der Schlitz 14 in seiner Breite weiter vergrößert werden kann, sodass damit eine axiale Verschiebung des Muffenelementes 12 auf dem Wellenkörper 10 sichergestellt werden kann, sofern das elastische Auffedern des Muffenelementes 12 beim Lösen der Schraubverbindung 15 nicht ausreicht. Zum Befestigen der Messerringe und Auswerferringe sind im Muffenelement 12 Gewindeabschnitte 27 eingebracht, in die Schraubelemente eingeschraubt werden können.

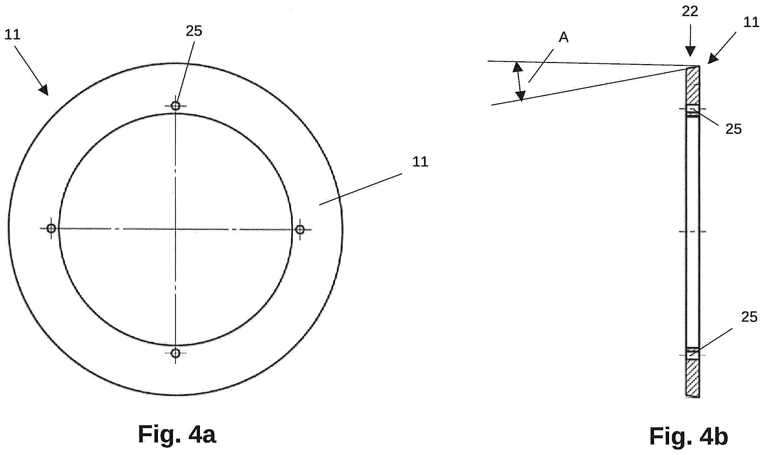

Die Figuren 4a und 4b zeigen eine Seitenansicht und eine Querschnittsansicht eines Messerringes 11. Im Messerring 11 sind auf vier Umfangspositionen Durchgangsöffnungen 25 eingebracht, durch die die Schraubelemente hindurchgeführt werden können, mit denen der Messerring 11 am Muffenelement 12 befestigt werden kann. Die Umfangsfläche 22 des Messerrings 11 weist einen Kegelwinkel A auf, der beispielsweise 15° C beträgt. Die Schneidkante wird dabei durch die Kante der Umfangsfläche 22 zu der Seitenfläche gebildet, die den größeren Durchmesser bildet.

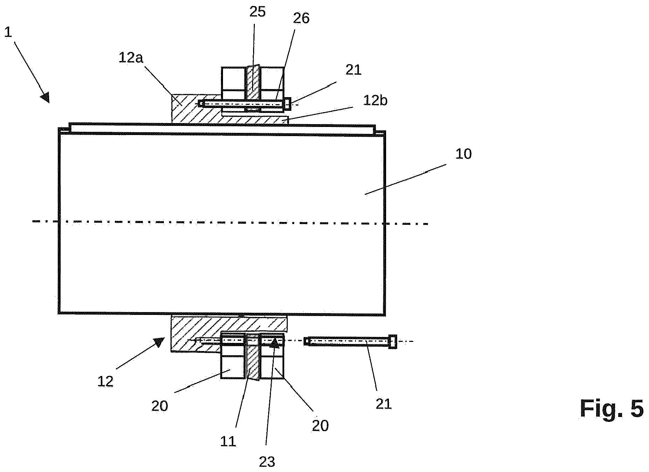

Schließlich zeigt Figur 5 eine quergeschnittene Ansicht des Muffenelementes 12 auf dem Wellenkörper 10 zur Bildung der Messerwelle 1. Die Anordnung des Passfederelementes 13 ist so vorgesehen, dass dieses mit einem ersten Teilabschnitt im Wellenkörper 10 einsitzt, und mit einem zweiten Teilabschnitt sitzt das Passfederelement 13 innenseitig im Muffenelement 12 ein. So wird das Muffenelement 12 rotationsstarr auf dem Wellenkörper 10 angeordnet.

Am Muffenelement 12 sind ein Messerring 11 und jeweils links und rechts benachbart zum Messerring 11 ein Auswerferring 20 angeordnet. Beide Auswerferringe 20 sind gemeinsam mit dem Messerring 11 mittels Schraubelementen 21 am Muffenelement 12 angeordnet. Das Einschrauben der Schraubelemente 21 erfolgt in einem Klemmabschnitt 12a des Muffenelementes 12, in dem in hier nicht näher gezeigter Weise auch die Schraubverbindung eingebracht ist, mit dem das Muffenelement 12 auf dem Wellenkörper 10 festgesetzt werden kann.

Die gezeigten Schraubelemente 21 durchwandern Durchgangsöffnungen 25 im Messerring 11 und Durchgangsöffnungen 26 in den Auswerferringen 20. So sind die Auswerferringe 20 gemeinsam mit dem Messerring 11 in einer Paketanordnung am Klemmabschnitt 12a des Muffenelementes 12 angebracht.

In axialer Richtung erstreckt sich am Klemmabschnitt 12a des Muffenelementes 12 ein weiterer Aufnahmeabschnitt 12b, der sich mit dem Messerring 11 und den Auswerferringen 20 in axialer Überdeckung befindet. Allerdings weist der Aufnahmeabschnitt 12b eine Außenumfangsfläche 23 mit einem Durchmesser auf, der kleiner ist als der Innendurchmesser des Messerringes 11 und der Auswerferringe 20. Durch diesen so gebildeten umlaufenden Spalt wird die Möglichkeit geschaffen, den Durchmesser des Muffenelementes 12 leicht zu vergrößern, um dieses auf dem Wellenkörper 10 axial zu verlagern, ohne dass die Vergrößerung des Innendurchmessers des Muffenelementes 12 verhindert wird durch die Anordnung des Messerringes 11 und/oder der Auswerferringe 20.

### Bezugszeichenliste:

- 1: Messerwelle

- 10: Wellenkörper
- 11: Messerring
- 12: Muffenelement
- 12a: Klemmabschnitt
- 12b: Aufnahmeabschnitt
- 13: Paßfederelement
- 14: Schlitz
- 15: Schraubverbindung
- 16: Abdrückschraube
- 17: Innenfläche
- 18: Nut
- 19: Wellennut
- 20: Auswerferring
- 21: Schraubelement
- 22: Umfangsfläche
- 23: Außenumfangsfläche
- 24: Rotationsachse
- 25: Durchgangsöffnung
- 26: Durchgangsöffnung
- 27: Gewindeabschnitt
- A: Kegelwinkel
- B: Breite

## Patentansprüche

1. Messerwelle (1) für eine Längsschneideanlage zum Längsschneiden eines Metallbandes, aufweisend einen Wellenkörper (10), auf dem mehrere Messerringe (11) aufgenommen sind, wobei jedem Messerring (11) ein Muffenelement (12) zugeordnet ist, mittels dem der Messerring (11) auf dem Wellenkörper (10) gehalten ist, **dadurch gekennzeichnet,**
**dass** zwischen dem Wellenkörper (10) und den Muffenelementen (12) ein Paßfederelement (13) eingebracht ist.

2. Messerwelle (1) nach Anspruch 1,
**dadurch gekennzeichnet,**
**dass** die Muffenelemente (12) auf einer Umfangsposition einen Schlitz (14) aufweisen, der so ausgeführt ist, dass bei einer Vergrößerung einer Breite (B) des Schlitzes (14) der Innendurchmesser der Muffenelemente (12) vergrößert wird und diese auf dem Wellenkörper (10) axial verlagerbar sind und bei einer Verkleinerung der Breite (B) des Schlitzes (14) der Innendurchmesser der Muffenelemente (12) verkleinert wird und diese auf dem Wellenkörper (10) festsetzbar sind.

3. Messerwelle (1) nach Anspruch 1 oder 2,
**dadurch gekennzeichnet,**
**dass** an den Muffenelementen (12) eine Schraubverbindung (15) eingerichtet ist und die den Schlitz (14) überspannt, sodass bei einem Festsetzen der Schraubverbindung (15) die Breite (B) des Schlitzes (14) verkleinerbar und bei einem Lösen der Schraubverbindung (15) die Breite (B) des Schlitzes (14) vergrößerbar ist.

4. Messerwelle (1) nach einem der Ansprüche 1 bis 3,
**dadurch gekennzeichnet,**
**dass** an den Muffenelementen (12) eine Abdrückschraube (16) eingerichtet ist und die den Schlitz (14) überspannt, sodass bei einem Festsetzen der Abdrückschraube (16) die Breite (B) des Schlitzes (14) vergrößerbar ist.

5. Messerwelle (1) nach einem der vorgenannten Ansprüche,
**dadurch gekennzeichnet,**
**dass** das Paßfederelement (13) am Wellenkörper (10) festgesetzt ist, wobei in der Innenfläche (17) der Muffenelemente (12) eine Nut (18) eingebracht ist, in die das Paßfederelement (13) eingreift.

6. Messerwelle (1) nach einem der vorgenannten Ansprüche,
**dadurch gekennzeichnet,**
**dass** das Paßfederelement (13) einen Kreisquerschnitt aufweist und mit einem ersten Teilabschnitt des Kreisquerschnittes in einer Wellennut (19) eingebracht ist und mit einem zweiten Teilabschnitt des Kreisquerschnittes in der Nut (18) in der Innenfläche (17) der Muffenelemente (12) eingebracht ist.

7. Messerwelle (1) nach einem der vorgenannten Ansprüche,
**dadurch gekennzeichnet,**
**dass** angrenzend an den Messerring (11) wenigstens ein Auswerferring (19) an dem Muffenelement (12) angeordnet ist.

8. Messerwelle (1) nach einem der vorgenannten Ansprüche,
**dadurch gekennzeichnet,**
**dass** der wenigstens eine Auswerferring (20) gemeinsam mit dem Messerring (11) mittels Schraubelementen (21) am Muffenelement (12) verschraubt ist.

9. Messerwelle (1) nach Anspruch 8,
**dadurch gekennzeichnet,**
**dass** der Messerring (11) eine Durchgangsöffnung (25) aufweist und/oder dass der wenigstens eine Auswerferring (19) eine Durchgangsöffnung (26) aufweist, wobei die Durchgangsöffnungen (25, 26) im Messerring (11) und/oder im Auswerferring (19) einen größeren Durchmesser aufweisen als der Durchmesser des Schraubelementes (21) zur Befestigung des Messerringes (11) bzw. des Auswerferringes (19) am Muffenelement (12).

10. Messerwelle (1) nach einem der vorgenannten Ansprüche,
**dadurch gekennzeichnet,**
**dass** der Messerring (11) eine Umfangsfläche (22) aufweist, die einen Kegelabschnitt mit einem Kegelwinkel (A) von 5° bis 20° und/oder von 7° bis 15° und/oder von 09° bis 11° und/oder von 10° bildet.

11. Messerwelle (1) nach einem der vorgenannten Ansprüche,
**dadurch gekennzeichnet,**
**dass** die Muffenelemente (12) axial unterteilt sind in einen Klemmabschnitt (12a) und in einen Aufnahmeabschnitt (12b), wobei der Klemmabschnitt (12a) die Anordnung der Schraubverbindung (15) und/oder die Anordnung der Abdrückschraube (16) aufweist und wobei der Messerring (11) und/oder der wenigstens eine Auswerferring (19) eine axiale Überdeckung mit dem Aufnahmeabschnitt (12b) aufweist.

12. Messerwelle (1) nach einem der vorgenannten Ansprüche,
**dadurch gekennzeichnet,**
**dass** der Messerring (11) und/oder der Auswerferring (19) einen Innendurchmesser aufweisen, der größer ist als der Durchmesser der Außenumfangsfläche (23) des Aufnahmeabschnitt (12b).

13. Verfahren zum Längsschneiden von Metallbändern mittels einer Längsschneideanlage zum Schneiden von Metallbändern, aufweisend eine Messerwelle (1) nach einem der Ansprüche 1 bis 11, wobei die Metallbänder mit einer Metallbanddicke von 1mm bis 4mm längsgeschnitten werden.

14. Verfahren nach Anspruch 13,
**dadurch gekennzeichnet,**
**dass** zum Ändern einer Streifenbreite der aus dem Metallband geschnittenen Metallbandstreifen die Schraubverbindung (15) der Muffenelemente (12) gelöst werden und/oder die Abdrückschraube (16) der Muffenelemente (12) angezogen werden, ohne die Schraubelemente (21) der Anbindung des wenigstens einen Auswerferringes (20) gemeinsam mit dem Messerring (11) zu lösen.

15. Verfahren nach Anspruch 13 oder 14,
**dadurch gekennzeichnet,**
**dass** die Muffenelemente (12) mit dem Messerring (11) und/oder dem wenigstens einen Auswerferring (20) auf der Messerwelle (1) verschoben werden, mit folgenden Schritten:
- Lösen der Schraubverbindung (15) der Muffenelemente (12) und/oder
- Anziehen der Abdrückschraube (16) der Muffenelemente (12),
- axiales Verschieben der Muffenelemente (12) mit dem Messerring (11) und/oder dem wenigstens einen Auswerferring (20) auf der Messerwelle (1) und
- Lösen der Abdrückschraube (16) der Muffenelemente (12) und/oder
- Festziehen der Schraubverbindung (15) der Muffenelemente (12).
